# EUROPEAN PATENT APPLICATION

(11) **EP 2 574 027 A1**
(43) Date of publication of application: **27.03.2013**
(21) Application number: 12250151.3
(22) Date of filing: 20.09.2012
(51) Int. Cl.: H04M 1/725, H04L 9/32, G06F 3/0346, G06Q 20/32

(54) **Security verification method for mobile device verification**

(30) Priority: 23.09.2011 TW 100134343
(71) Applicant: Yang, Chien-Kang, Taipei City 10682 (TW)
(72) Inventor: Yang, Chien-Kang, Taipei City 10682 (TW)
(74) Representative: Robson, Aidan John

(57) **Abstract**

A security verification method is to be implemented by a mobile device (1) for verifying the mobile device (1). In the method, the mobile device (1) is configured to retrieve at least one instruction that indicates a particular motion from a memory unit (12), to output the instruction, to generate an operation signal according to operation from a user via one of a motion sensing unit (14) and a button unit (15), to obtain the operation signal from one of the motion sensing unit (14) and the button unit (15) and to determine whether the operation signal conforms with the motion corresponding to the instruction, and to generate a confirmation signal indicating that the mobile device (1) is verified when the determination thus made is affirmative.

## Description

This application claims priority of Taiwanese Application No. 100134343, filed on September 23, 2011.

The invention relates to a security verification method, more particularly to a security verification method for verifying a mobile device.

The functionalities of mobile devices (e.g., a smartphone, a tablet computer, a personal digital assistant, etc.) and the accessibility of wireless networks are rapidly growing. Avariety of applications, such as electronic commerce service that is conventionally designed to be implemented using personal computers, are now able to be implemented using the mobile devices independently. However, many operation modes still remain, unsuitable for use with current mobile devices.

For example, an online payment using a credit card is generally executed on a personal computer. When executing the online payment, a user is first instructed to enter personal information via an interface (e.g., a webpage displayed on the personal computer) including a username and an associated password for verifying the identity of the user. After identity of the user is verified, the interface further instructs the user to enter credit card information, which may include a card number, an expiration date, etc.

When using the personal computer to execute the online payment, the personal information and the credit card information are typically entered using a keyboard. However, there is a risk that the operating system of the personal computer is unknowingly implanted with a malicious program (e. g. , a Troj an horse) that is capable of recording input strokes of the keyboard and transmitting the same to a foreign party stealthily. That is to say, the user may unknowingly give out the personal information. The foreign party then may be able to remotely control the personal computer via the Troj an horse, using the illegally obtained personal information.

In order to ensure that the personal computer is not controlled by the Trojan horse, virtual keyboard system and challenge-response test, such as CAPTCHA, are conventionally implemented. However, such tests may be very inconvenient and time-consuming for the user to pass. In addition, when the personal information is already obtained by the foreign party, such tests alone cannot serve to prevent the foreign party from remotely controlling the personal computer as well.

In contrast, a mobile device typically includes a motion sensor that generates signal in response to an operation (e.g., turning, swaying, etc.) from a user. Such signal, when coupled to the convention password method, may be capable of both addressing the authorization problem, and of ensuring that the mobile device is not controlled by the Trojan horse.

Therefore, the object of the present invention is toprovide a securityverificationmethod that is capable of enhancing security during data transmission, and that is suitable to be implemented using a mobile device.

Accordingly, a security verification method of the present invention is to be implemented by a mobile device for verifying the mobile device. The mobile device includes a processing unit, a memory unit, an output unit, a motion sensing unit and a button unit. The memory unit stores at least one instruction that indicates a particular motion. The security verification method comprises the following steps of:
(a) configuring the processing unit to retrieve the instruction from the memory unit;
(b) configuring the output unit to output the instruction;
(c) configuring one of the motion sensing unit and the button unit to allow a user to generate an operation signal according to operation from a user;
(d) configuring the processing unit to obtain the operation signal from one of the motion sensing unit and the button unit and to determine whether the operation signal conforms with the motion corresponding to the instruction; and
(e) when the determination made in step (d) is affirmative, configuring the processing unit to generate a confirmation signal indicating that the mobile device is verified.

Other features and advantages of the present invention will become apparent in the following detailed description of the preferred embodiment with reference to the accompanying drawings, of which:
Figure 1 is a schematic block diagram of a mobile device for implementing a security verification method according to the invention;
Figure 2 is a flow chart showing steps of a preferred embodiment of the security verification method according to the invention;
Figure 3 is a schematic view showing a user orienting the mobile device as instructed;
Figure 4 is a schematic view showing a user flipping the mobile device as instructed;
Figure 5 is schematic view showing a user pressing a volume control button of the mobile device as instructed; and
Figure 6 is a schematic view showing a user swaying the mobile device as instructed.

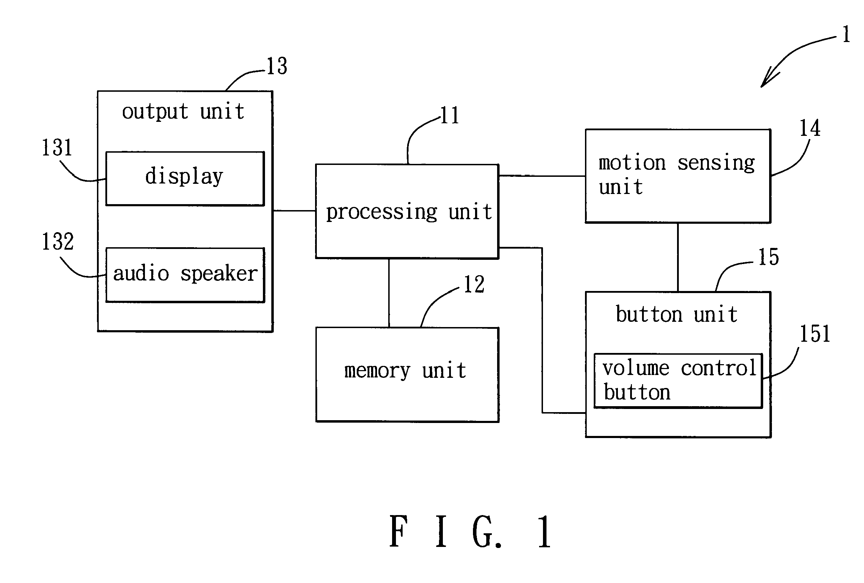

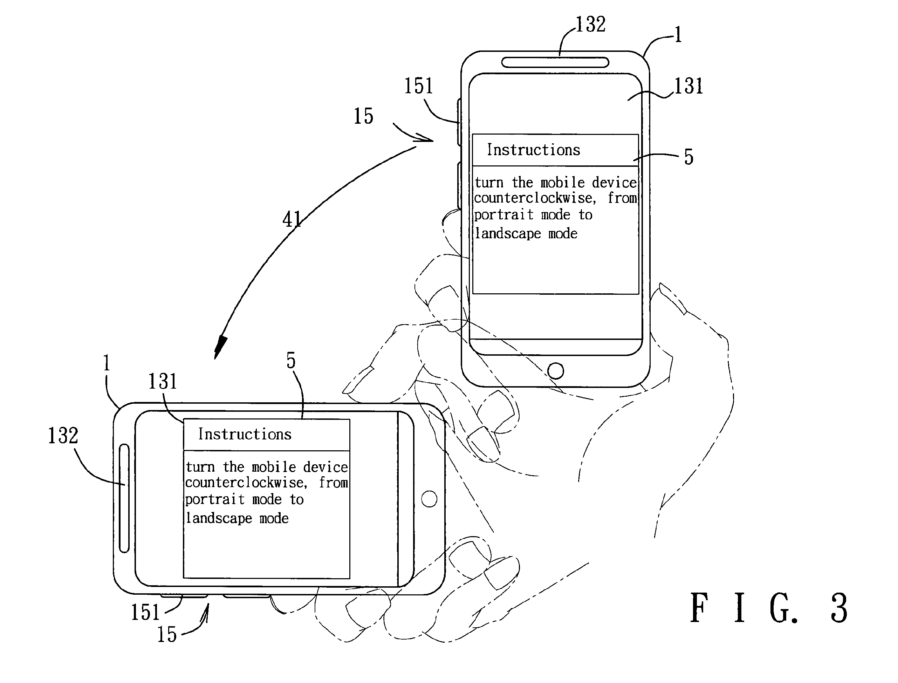

As shown in Figure 1, the preferred embodiment of a security verification method according to the present invention is implemented by a mobile device 1. The mobile device 1 includes a processing unit 11, a memory unit 12, an output unit 13, a motion sensing unit 14 and a button unit 15. In this embodiment, the mobile device 1 is a mobile phone, and may be other mobile devices, such as a tablet computer or a personal digital assistant, in other embodiments. The memory unit 12 stores a plurality of instructions, each indicating a particular motion. The output unit 13 includes a display 131 and an audio speaker 132 (see Figure 3) . The motion sensing unit 14 is a micro electro mechanical system (MEMS) component, and includes an accelerometer, a gyro meter, and/or a pressure sensor. The button unit 15 includes a volume control button 151, and can include other buttons in other embodiments. When the motion sensing unit 14 detects a motion of the mobile device 1, or the button unit 15 is operated by a user, an operation signal is generated from one of the motion sensing unit 14 and the button unit 15.

The processing unit 11 is electrically connected to the memory unit 12, the output unit 13, the motion sensing unit 14 and the button unit 15, and is operable to execute anapplication. Forexample, theapplicationisanonline transaction program, and may be other programs requiring a high level of security. The security verification method can be integrated as a subprogram of the application, and verifies the mobile device 1, in addition to a password, before proceeding to the online transaction program.

When the user triggers execution of the application, the mobile device 1 is configured to first perform the security verification method including the following steps.

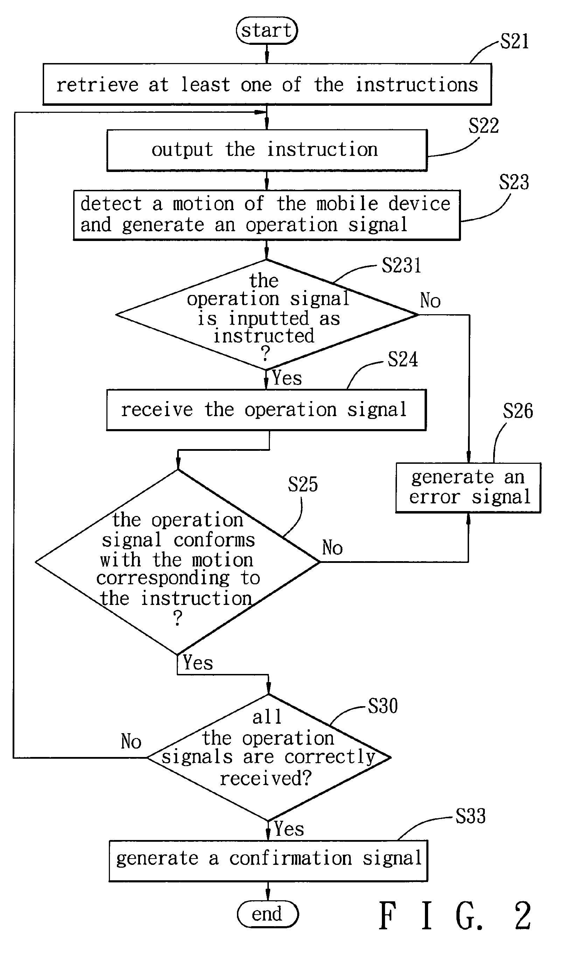

Further referring to Figure 2, in step 21, the processing unit 11 is operable to retrieve at least one of the instructions from the memory unit 12. Some non-limiting exemplary instructions are listed in Table 1 below. In this embodiment, the processing unit 11 randomly retrieves five instructions, e.g., instruction Nos. 1, 9, 13, 18 and 20.

**Table 1**

| No. | Instructions | Notification | Criteria |
|---|---|---|---|
| 1 | turn the mobile device 1 counterclockwise, from portrait mode to landscape mode | By the display 131 | Perform within a predetermined time limit |
| 2 | turn the mobile device 1 clockwise, from portrait mode to landscape mode | As above | As above |
| 3 | turn the mobile device 1 from landscape mode to a lying position | As above | As above |
| 4 | turn the mobile device 1 from landscape mode to a prostrate position | As above | As above |
| 5 | sway the mobile device 1 | As above | As above |
| 6 | press the button unit 15 | As above | As above |
| 7 | turn the mobile device 1 counterclockwise, from portrait mode to landscape mode | By the audio speaker 132 | Perform the motion when instructed through the audio speaker 132 |
| 8 | turn the mobile device 1 clockwise, from portrait mode to landscape mode | As above | As above |
| 9 | turn the mobile device 1 horizontally | As above | As above |
| 10 | turn the mobile device 1 vertically | As above | As above |
| 11 | sway the mobile device 1 | As above | As above |
| 12 | press the button unit 15 | As above | As above |
| 13 | press and hold the button unit 15 | As above | Press the button unit 15 wheninstructed through the audio speaker 132 and hold until notified by the audio speaker 132 |
| 14 | turn the mobile device 1 counterclockwise, from portrait mode to landscape mode | By the display 131 | Perform the motion when instructed through the audio speaker 132 |
| 15 | turn the mobile device 1 clockwise, from portrait mode to landscape mode | As above | As above |
| 16 | turn the mobile device 1 horizontally | As above | As above |
| 17 | turn the mobile device 1 vertically | As above | As above |
| 18 | sway the mobile device 1 | As above | As above |
| 19 | press the button unit 15 | As above | As above |
| 20 | press the button unit 15 | As above | Press the |
| | until notified | | button unit 15 wheninstructed through the audio speaker 132 and hold until notified by the display 131 |

In step 22, the output unit 13 is operable to output the first one of the instructions (i.e., the instruction No. 1). As shown in Figure 3, the instruction No. 1 is displayed via a pop-up window 5 on the display 131, using text to instruct the user to perform the motion to turn the mobile device 1, from portrait mode to landscape mode in a counterclockwise direction, indicated by an arrow 41 in Figure 3. One of the motion sensing unit 14 and the button unit 15(the motion sensing unit 14 in this case) is then operable to detect a motion of the mobile device 1 made by the user and to generate an operation signal according to the detected motion in step 23, and the processing unit 11 is operable to determine whether the operation signal is inputted as instructed in step 231. In this case, the processing unit 11 starts counting a time limit, and when the operation signal is not inputted within the time limit, the flow proceeds to step 26, in which the processing unit 11 is operable to generate an error signal indicating that the mobile device 1 is unverified. The application is thereby terminated in this embodiment, and the flow may go back to step 21 to restart the method in other embodiments.

Otherwise, the flow proceeds to step 24, where the processing unit 11 is operable to receive the operation signal from the motion sensing unit 14. Then, in step 25, the processing unit 11 is operable to determine whether the operation signal received in step 24 conforms with the motion corresponding to the instruction No. 1. When the determination is affirmative (i.e., the mobile device 1 is turned according to the instruction No. 1), the flow proceeds to step 30. Otherwise, the flow proceeds to step 26.

In step 30, the processing unit 11 is operable to determine whether all the instructions retrieved in step 21 have been outputted and all the corresponding operation signals are correctly received. When the determination is negative, the flow goes back to step 22 to output another one of the instructions retrieved in step 21. Otherwise, the flow proceeds to step 33, in which the processing unit 11 is operable to generate a confirmation signal indicating that the mobile device 1 is verified. At this time, since some of the instructions have not yet been outputted, the flow goes back to step 22 for processing the second instruction.

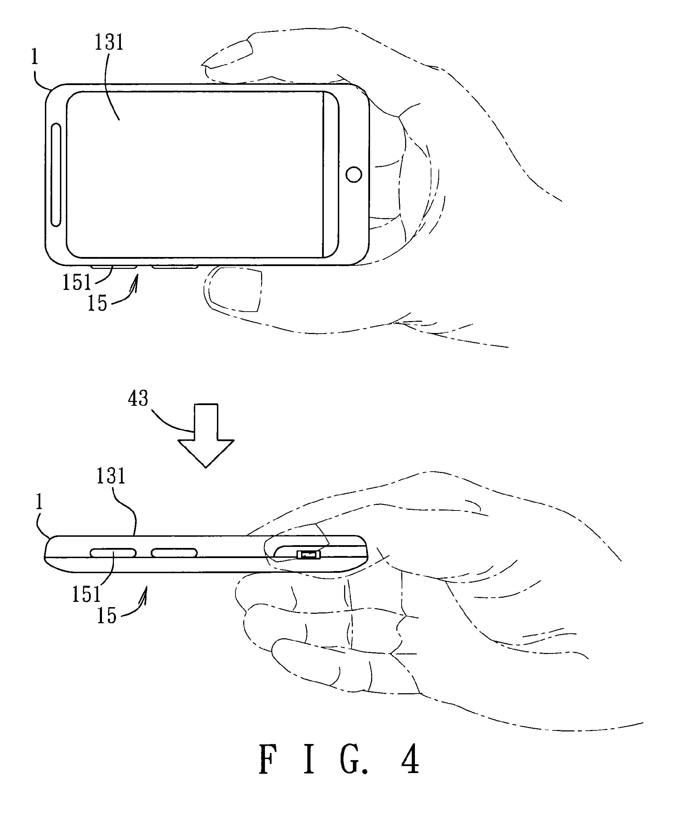

Further referring to Figure 4, in step 22, the audio speaker 132 of the output unit 13 is operable to output the second instruction (i.e., the instruction No. 9). The instruction No. 9 instructs the user to turn the mobile device 1 from the landscape mode to a lying position upon hearing a notification sound (e.g., a "beep" sound generated by the audio speaker 132) in a direction indicated by an arrow 43. The motion sensing unit 14 is then operable to detect a motion of the mobile device 1 and to generate another operation signal according to the detected motion in step 23. As described above, the processing unit 11 starts counting the time limit in step 231, and since the determination regarding the time limit is identical among the various instructions, details thereof are not repeated herein for the sake of brevity.

Afterward, in step 24, the processing unit 11 is operable to receive the operation signal from the motion sensing unit 14. Then, when the mobile device 1 is turned as instructed, the processing unit 11 determines that the operation signal conforms with the motion corresponding to the instruction in step 25, the flow proceeds to step 30, and then goes back to step 22 for processing the third instruction.

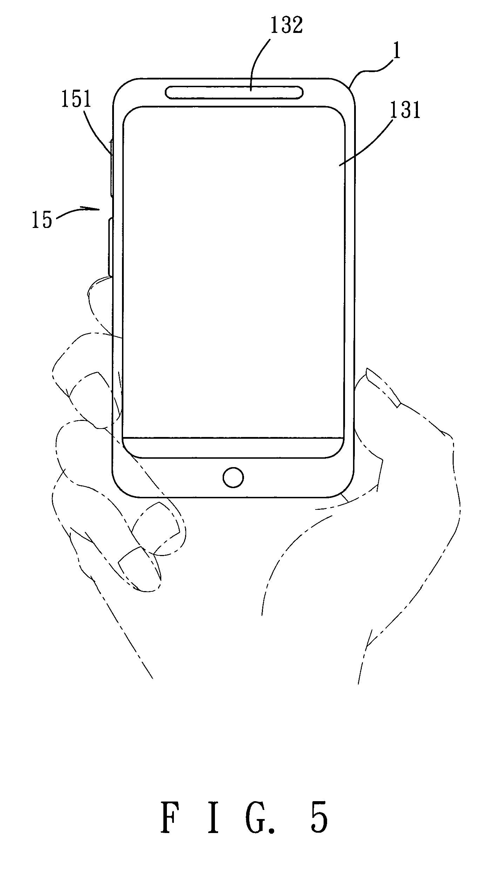

Further referring to Figure 5, in step 22, the audio speaker 132 of the output unit 13 is operable to output the third instruction (i.e., instruction No. 13). The instruction No. 13 instructs the user to press and hold the volume control button 151 of the button unit 15, upon hearing the notification sound, until notified by a stop notification to release the volume control button 151. In step 23, the button unit 15 is configured to detect operation of the volume control button 151 and to generate an operation signal according to the operation of the volume control button 151. The stop notification is then outputted by the audio speaker 132, after a predetermined time has elapsed. When it is determined that the volume control button 151 is held continuously during the predetermined time, the processing unit 11 determines that the operation signal conforms with the motion corresponding to the instruction No.13 in step 25, and the flow proceeds to step 30. Otherwise, the flow proceeds to step 26, and the method is terminated. At this time (assuming the operation signal conforms with the motion), since some of the instructions have not yet been outputted, the flow proceeds to step 30, and subsequently goes back to step 22 for processing the fourth instruction.

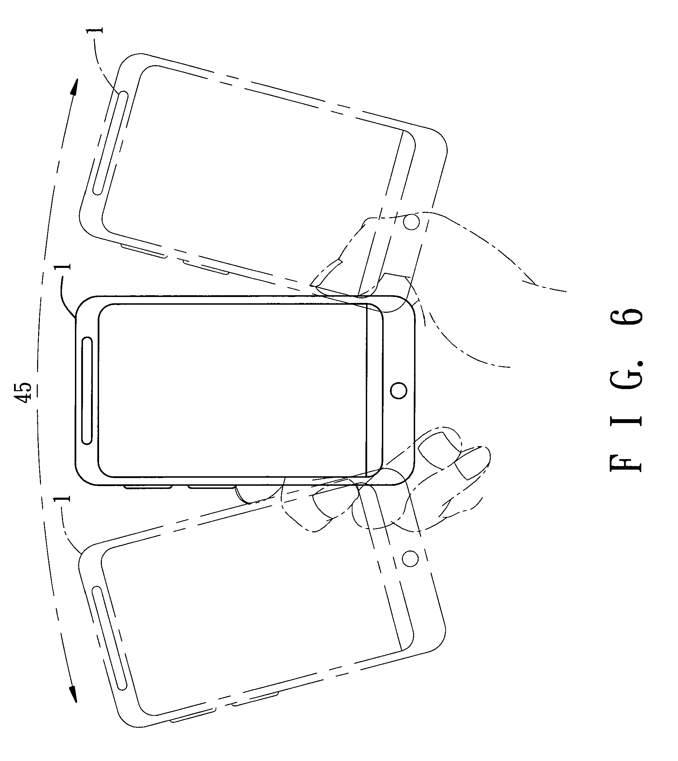

Further referring to Figure 6, the display 131 of the output unit 13 is operable to output the fourth instruction (i.e., the instruction No. 18). The instruction No. 18 instructs the user to sway the mobile device 1 as indicated by an arrow 45 upon hearing a notification sound. The motion sensing unit 14 is then operable to detect a motion of the mobile device 1 and to generate another operation signal according to the detected motion in step 23. When the mobile device 1 is swayed as instructed, the processing unit 11 determines that the operation signal conforms with the motion corresponding to the instruction No. 18 in step 25, and the flow proceeds to step 30. Otherwise, the flow proceeds to step 26, and the method is terminated. At this time (assuming the operation signal conforms with the motion), since some of the instructions have not yet been outputted, the flow proceeds to step 30, and subsequently goes back to step 22 for processing the fifth instruction.

Referring back to Figure 5, in step 22, the audio speaker 132 of the output unit 13 is operable to output the fifth instruction (i.e., the instruction No. 20). The instruction No. 20 indicates the user to press and hold the volume control button 151 of the button unit 15, upon hearing the notification sound, until notified by the stop notification to release the volume control button 151. In step 24, the button unit 15 is configured to detect operation of the volume control button 151 and to generate the operation signal according to the volume control button 151. The stop notification is then outputted by the display 131, after a predetermined time has elapsed. When it is determined that the volume control button 151 is held continuously during the predetermined time, the flow proceeds to step 30. Otherwise, the flow proceeds to step 26, and the method is terminated. At this instant (assuming the operation signal conforms with the motion), the flow proceeds to step 30, and subsequently proceeds to step 33. In step 33, the processing unit 11 then generates the confirmation signal, and the application is able to proceed to conduct the online transaction after the mobile device is verified.

To sum up, the present invention utilizes the MEMS device that is disposed exclusively on the mobile device 1, such that a foreign party is not able to pass the security verification method using a computer device and/or a computer program. As a result, the application can be executed with a relatively higher level of security.

While the present invention has been described in connection with what is considered the most practical and preferred embodiment, it is understood that this invention is not limited to the disclosed embodiment but is intended to cover various arrangements included within the spirit and scope of the broadest interpretation so as to encompass all suchmodifications and equivalent arrangements.

## Claims

1. A security verification method to be implemented by a mobile device (1) for verifying the mobile device (1), the mobile device (1) including a processing unit (11), a memory unit (12), an output unit (13), a motion sensing unit (14) and a button unit (15), the memory unit (12) storing at least one instruction that indicates a particular motion, said security verification method being **characterized by** the following steps of:
(a) configuring the processing unit (11) to retrieve the instruction from the memory unit (12);
(b) configuring the output unit (13) to output the instruction;
(c) configuring one of the motion sensing unit (14) and the button unit (15) to generate an operation signal according to operation from a user;
(d) configuring the processing unit (11) to obtain the operation signal from one of the motion sensing unit (14) and the button unit (15) and to determine whether the operation signal conforms with the motion corresponding to the instruction; and
(e) when the determination made in step (d) is affirmative, configuring the processing unit (11) to generate a confirmation signal indicating that the mobile device (1) is verified.

2. The security verification method as claimed in Claim 1, further **characterized by**, after step (d), a step of:
when the determination made in step (d) is negative, configuring the processing unit (11) to generate an error signal indicating that the mobile device (1) is unverified.

3. The security verification method as claimed in any one of Claims 1 and 2, the memory unit (12) storing a plurality of the instructions;
**characterized in that**, in step (a), the processing unit (11) is configured to randomly retrieve at least one of the instructions from the memory unit (12).

4. The security verification method as claimed in any one of Claims 1 to 3, **characterized in that**, in step (c), the motion sensing unit (14) is configured to detect a motion of the mobile device (1) made by the user and to generate the operation signal according to a detected motion.

5. The security verification method as claimed in any one of Claims 1 to 4, the button unit (15) including a volume control button (151), **characterized in that**, in step (c), the button unit (15) is configured to detect operation of the volume control button (151) and to generate the operation signal according to the operation of the volume control button (151).

6. The security verification method as claimed in any one of Claims 1 to 5, **characterized in that**, in step (c), the output unit (13) is configured to instruct the user to perform the motion corresponding to the instruction.

7. The security verification method as claimed in Claim 6, **characterized in that**, in step (c), the output unit (13) is further configured to instruct the user to perform the motion within a predetermined time limit, and the processing unit (11) is further configured to determine whether the operation signal is inputted within the time limit.

8. The security verification method as claimed in any one of Claims 1 to 7, **characterized in that**, in step (d), the determination made by the processing unit (11) is affirmative when the operation signal persists for a predetermined duration.
